Europäisches Patentamt

European Patent Office

Office européen des brevets

(19)

(11) Veröffentlichungsnummer : **0 098 943**
B1

# EUROPÄISCHE PATENTSCHRIFT

(12)

(45) Veröffentlichungstag der Patentschrift :
03.12.86

(21) Anmeldenummer : 83105033.1

(22) Anmeldetag : 20.05.83

(51) Int. Cl.⁴ : **F 27 D 17/00**, F 27 B 13/00

(54) Verfahren und Vorrichtung zur thermischen Reinigung von Abgasen aus Ringöfen.

(30) Priorität : 07.07.82 DE 3225441

(43) Veröffentlichungstag der Anmeldung :
25.01.84 Patentblatt 84/04

(45) Bekanntmachung des Hinweises auf die Patenterteilung : 03.12.86 Patentblatt 86/49

(84) Benannte Vertragsstaaten :
AT BE DE FR GB IT SE

(56) Entgegenhaltungen :
DE-A- 2 519 738
DE-A- 2 719 368
DE-A- 3 004 506
DE-C-  118 471
DE-C-  524 070

(73) Patentinhaber : C. CONRADTY NÜRNBERG GmbH &
Co. KG
Grünthal 1-6
D-8505 Röthenbach a.d. Pegnitz (DE)

(72) Erfinder : Schieber, Franz
Finkengasse 94 D-8505 Röthenbach a.d. Pegnitz
Ortsteil Haimendorf (DE)
Erfinder : Horn, Oscar
Spessartstrasse 1
D-8500 Nürnberg 141 (DE)
Erfinder : Fink, Friedrich
Am Rudolphshof 28
D-8560 Lauf a.d. Pegnitz (DE)
Erfinder : Lederer, Heinrich
Schwaiger Strasse 14
D-8505 Röthenbach a.d. Pegnitz (DE)
Erfinder : Kreutzer, Werner
Beethoven-Strasse 2
D-8522 Herzogenaurach (DE)

(74) Vertreter : Kern, Wolfgang, Dipl.-Ing. Patentanwälte et
al
Dipl.-Ing. Herbert Tischer Dipl.-Ing. Wolfgang Kern
Dipl.-Chem. Dr. H.P. Brehm Albert-Rosshaupter-
Strasse 65
D-8000 München 70 (DE)

## Beschreibung

Die Erfindung betrifft ein Verfahren zur thermischen Reinigung von Abgasen aus Ringöfen für das Brennen und Glühen von kohlenstoffhaltigen Materialien, die mit mehreren hintereinanderlaufenden Feuern betrieben werden, wobei wenigstens ein Teil der dem Abgaskamin zugeführten Rauchgase nach erfolgtem Wärmeaustausch in den Vorheizkammern und Anreicherung mit Flüchtigem und Schwebstoffen, die während des Ofenprozesses entstehen, in die letzten geschlossenen Abkühlkammern der Feuer zurückgeführt wird und wobei ein Ventilator im Rauchgaskanal die Abgase in den Abgaskamin drückt.

Ferner betrifft die Erfindung eine Vorrichtung zur Durchführung dieses Verfahrens.

Ringöfen herkömmlicher Bauart zum Brennen von Kunstkohlekörpern emmitieren ein Abgas mit einem relativ hohen Schwebstoffgehalt. Die Schwebstoffe bestehen überwiegend aus aromatischen Kohlewasserstoffen in gasförmigem Zustand und/oder in Form von Aerosolen. Nach den geltenden Umweltbestimmungen sind nur Schwebstoffemissionen von maximal 250 mg C/m³ zugelassen. Deshalb müssen die Abgase zur Vermeidung einer Überschreitung dieses Grenzwertes beispielsweise durch Elektrofilter, Wäscher oder Nachverbrennungsanlagen gereinigt werden, die jedoch wegen der Bewältigung der großen Abgasvolumina aufwendig und teuer sind.

Es ist nun bekannt, verunreinigte Abgase eines Ringofens mittels Rückführung im Ofen selbst zu verbrennen (DE-OS 27 19 368).

Der bekannte Ringofen, der von dem letztgenannten Betriebskonzept Gebrauch macht, weist jedoch den Nachteil auf, daß in den Brennkammern, durch das Einblasen bedingt, ein Überdruck herrscht, der zu einem Gasstau in den Kammern führt, mit entsprechender Qualmentwicklung nach außen und am anderen Ende der Ofenreihe, d. h. vor der beweglichen Pfeife, in den Vorheizkammern ein Unterdruck. In den Ofenkammern herrscht somit zwischen der Druckseite und Saugseite ein erhebliches Druckgefälle. Dadurch ergeben sich aber auch erhebliche regelungstechnische Probleme, da die Ventilatoren auf der Druckseite und Saugseite so gesteuert werden müssen, daß der Gasstau in den Kammern nicht zur groß wird. Darüber hinaus wird durch die in die Brennkammern eingeblasene Luft bzw. das Luft/Gasgemisch unter Umständen bewirkt, daß die Temperatur in den Vorheizkammern zu weit vorgeschoben wird, so daß die bekannte Verfahrensweise auch vom Gesichtspunkt der Einhaltung der erforderlichen Brenntemperaturen problematisch ist.

Die Aufgabe der Erfindung besteht deshalb darin, das Verfahren der eingangs genannten Art so zu ändern und die konstruktiven Voraussetzungen hierfür am Ringofen zu schaffen, daß durch eine an sich bekannte mehrfache Nutzung der Luft und damit drastische Verringerung des Sauerstoffgehaltes in den Brennkammern bei annähernd gleicher Schwebstoffkonzentration die gesamte Abgasmenge eines Ringofens deutlich vermindert wird, ohne daß dadurch erhebliche zusätzliche regelungstechnische Probleme bei der Steuerung des in den Kammern herrschenden Druckes und bei der Temperaturhaltung auftreten.

Diese Aufgabe wird erfindungsgemäß dadurch gelöst, daß die zum Wärmetransport erforderliche Trägerluft, die gleichzeitig die Sekundärluft für die Verbrennung des Brennstoffs und der Pyrolysedämpfe darstellt, über die zwischen den letzten Deckeln der Feuer und dem Abgaskanal befindlichen Ventilatoren angesaugt und über Pfeifen zwischen dem Abgaskanal und einer Abkühlkammer den Feuern zugeführt wird, wobei durch Abdichtung der Kassetten der jeweils ersten geöffneten Kammer eines Feuers unkontrollierter Lufteintritt verhindert wird, die Rauchgase zur Verbrennung der in ihnen enthaltenen Schwebstoffe dem Feuer teilweise rückgeführt werden und zur Sicherstellung einer ausreichenden Sauerstoffkonzentration des Trägergases in den einzelnen Feuern die Pfeifen regelbare Frischluftöffnungen aufweisen und durch regelbare Klappen in den Rauchgaskanälen der für diesen Ofenbetrieb erforderliche Unterdruck eingestellt wird.

Die zur Durchführung des Verfahrens dienende Vorrichtung kennzeichnet sich erfindungsgemäß dadurch, daß jedes einzelne Feuer durch einen Ventilator hinter dem letzten Deckel mit dem Rauchgaskanal verbunden ist, daß die erste Abkühlkammer über eine Pfeife mit dem Rauchgaskanal verbunden ist, daß die Kassetten der ersten geöffneten Kammer durch Abdeckrahmen abgedichtet sind, daß die Pfeifen regelbare Frischluftöffnungen aufweisen und daß in die Rauchgaskanäle regelbare Klappen eingebaut sind, um den durch den Kaminventilator erzeugten Unterdruck in den Rauchgaskanälen zu regeln.

Die Erfindung wird nachfolgend anhand des in der Zeichnung dargestellten Ausführungsbeispiels näher erläutert.

In der Zeichnung zeigen :

Figur 1 eine schematische Darstellung eines Einzelfeuers eines Ringofens mit den zugehörigen Kammern und

Figur 2 eine schematische Ansicht mehrerer hintereinander angeordneter Feuer der in Fig. 1 gezeigten Art eines Ringofens.

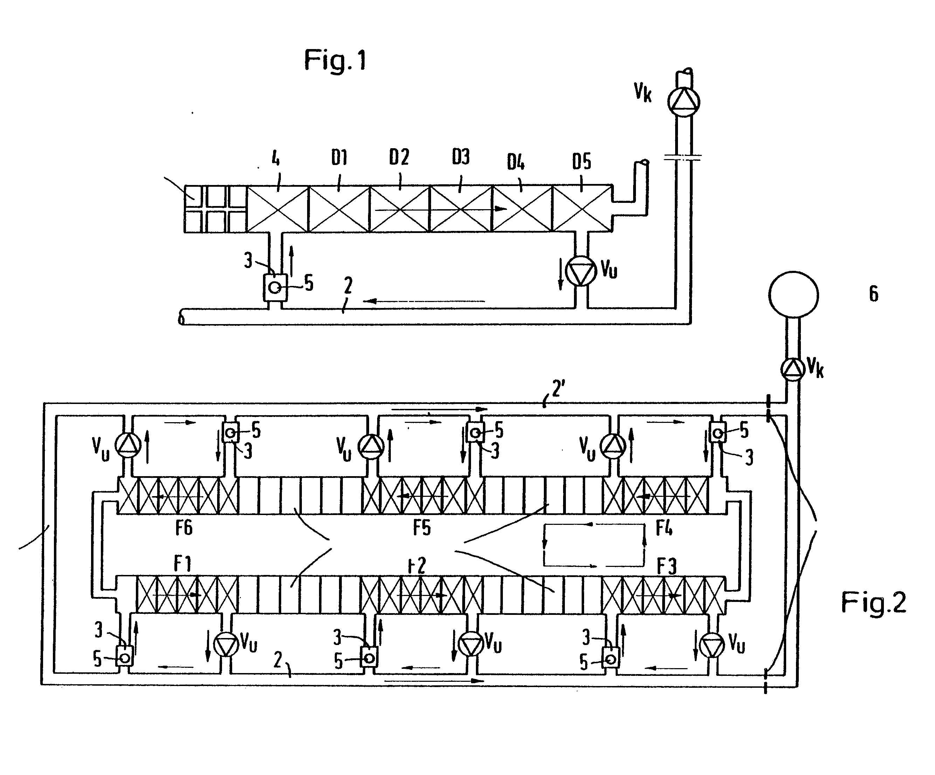

Durch den Deckel D 1 der Hauptbrennkammer (Fig. 1) erfolgt die Brennstoffzufuhr mit ca. 25 kg Öl/h sowie die Zufuhr der Primärluft. Letztere dient zur Zerstäubung des Brennstoffs und macht nur etwa 5 bis 10 % der zur Verbrennung notwendigen Luftmenge aus.

Die zum Wärmetransport erforderliche sogen. Trägerluft, die gleichzeitig die Sekundärluft für die Verbrennung des Brennstoffs und der Pyrolysedämpfe darstellt, wird bei allen Feuern F 1 bis F 6 über die Umwälz-Ventilatoren $V_u$ zwischen dem Deckel D 5 und dem Rauchgaskanal 2, 2' angesaugt und über die Pfeife 3 zwischen der ersten Abkühlkammer 4 und dem Rauchgaskanal aus letzterem zugeführt (Fig. 2).

Die Trägerluft entspeichert die abgebrannte Kammer, wird also vorgewärmt, wodurch sich der Feuerwirkungsgrad verbessert, und führt den Wärmeinhalt zur Hauptbrennkammer unter Deckel D 1 und zu den nachgeschalteten Kammern unter den Deckeln D 2 bis D 5.

Um in allen Feuern eine ausreichende Sauerstoffkonzentration im Trägergas, dessen Menge etwa das 6-fache der bei der Verbrennung des Brennstoffs und der Pyrolysedämpfe anfallenden Abgasmenge beträgt, sicherzustellen, sind die Pfeifen 3 mit regelbaren Frischluftöffnungen 5 versehen. Ihre Steuerung erfolgt in Abhängigkeit vom Sauerstoffgehalt des umgewälzten Rauchgases. Die Rauchgaskanäle 2, 2' enthalten regelbare Klappen 7. Vor dem Kamin 6 befindet sich der Kaminventilator $V_k$.

Sowohl die Umwälzventilatoren an den Deckeln D 5 der Feuer als auch die Pfeifen 3 an den ersten Abkühlkammern 4 werden turnusmäßig mitversetzt.

An einem in Betrieb befindlichen erfindungsgemäßen Ringofen wurden Messungen durchgeführt, die ergaben, daß die Abgasmenge um 90 % und die Emission von Pechdämpfen um 75 % geringer sind als bei einem nicht nach dem erfindungsgemäßen Verfahren betriebenen Ringofen.

## Patentansprüche

1. Verfahren zur thermischen Reinigung von Abgasen aus Ringöfen für das Brennen und Glühen von kohlenstoffhaltigen Materialien, die mit mehreren hintereinanderlaufenden Feuern betrieben werden, wobei wenigstens ein Teil der dem Abgaskamin zugeführten Rauchgase nach erfolgtem Wärmeaustausch in den Vorheizkammern unter Anreicherung mit flüchtigen Bestandteilen und Schwebstoffen, die während des Ofenprozesses entstehen, in die letzten geschlossenen Abkühlkammern der Feuer zurückgeführt und ein anderer Teil der Primärluft zugemischt wird, und wobei ein Kaminventilator im Rauchgaskanal die Abgase in den Abgaskamin drückt, dadurch gekennzeichnet, daß die zum Wärmetransport erforderliche Trägerluft, die gleichzeitig die Sekundärluft für die Verbrennung des Brennstoffs und der Pyrolysedämpfe darstellt, mit hinter den letzten Deckeln (D5) der Feuer befindlichen, regelbaren Ventilatoren ($V_u$) angesaugt, in den an diese angeschlossenen Rauchgaskanal (2, 2') hineingeblasen und über zwischen dem Rauchgaskanal (2, 2') und den Abkühlkammern (4) befindliche Pfeifen (3) den Feuern zugeführt wird, wobei durch Abdichtung der Kassetten der jeweils ersten geöffneten Kammer eines Feuers mittels Abdeckrahmen unkontrollierter Lufteintritt verhindert wird und durch regelbare Klappen (7) in den Rauchgaskanälen (2, 2') der für den Ofenbereich erforderliche, durch den Kaminventilator ($V_k$) erzeugte Unterdruck in den Rauchgaskanälen (2, 2') geregelt wird.

2. Verfahren nach Anspruch 1, dadurch gekennzeichnet, daß im Bereich der Pfeifen (3) mittels regelbarer Frischluftöffnungen (5) zur Sicherstellung einer ausreichenden Sauerstoffkonzentration des Trägergases in den einzelnen Feuern Frischluft eingeführt wird.

## Claims

1. Process for the thermal cleaning of ring furnace exhaust gases for the burning and annealing of carbonacous materials, which ring furnaces are using several successively running fires, wherein at least part of the exhaust gases conducted to the exhaust gas flue after having brought in heat exchange within the pre-heating chambers where they have become enriched with effluent particles and smouldering materials originating from the furnace process, are returned into the last closed cooling chambers of the fires and another part of the exhaust gases are mixed to the primary air, and wherein the exhaust gases are pressed into the exhaust gas flue by a flue-van within the smoke-flue, characterized in that the carrying air ·necessary for the heat transport corresponding also to the secondary air for the combustion of the fuel and the vapors of the pyrolysis is sucked-in by controllable vans ($V_u$) positioned behind the last lids (D5) of the fires, blown into the smoke-fuel (2, 2') connected thereto and introduced through pipes (3) arranged between the smoke-fuel (2, 2') and the cooling chambers (4) into the fires, so that by the sealing of the cartridges of the respective first opened chamber of a fire by means of a cover frame uncontrollably entering of air is avoided and the vacuum necessary for the furnace area and produced by the flue-vent ($V_k$) and controllable traps (7) is controlled within the smoke-flues (2, 2').

2. Process according to claim 1, characterized in that in order to secure a sufficient oxygen-concentration of the carrying gases in the several fires fresh air is introduced in the area of the pipes (3) by means of controllable fresh air openings (5).

## Revendications

1. Procédé de purification thermique des gaz d'échappement des fours annulaires composés de plusieurs foyers et servant à incinérer des matériaux contenant du carbone, du genre selon lequel une partie au moins des gaz d'échappement transmis à la cheminée est recyclée vers les dernières chambres de refroidissement fermées des foyers après échange de chaleur dans les chambres de préchauffage et enrichissement par les matières volatiles et les matières en suspension produites par le fonctionnement du four et une autre partie des gaz est mélangée à l'air primaire, un ventilateur monté dans la canalisation des gaz d'échappement refoulant ceux-ci vers la cheminée, caractérisé en ce que l'air porteur nécessaire au transfert de la chaleur qui est également l'air secondaire de combustion du carburant et des vapeurs pyrolytiques est aspiré par les ventilateurs réglables (Vu) montés derrière les dernières chapelles (D5) des foyers, est injecté dans la canalisation de gaz d'échappement (2, 2'), puis transmis aux foyers par les carneaux (3) reliant cette canalisation (2, 2') et les chambres de refroidissement (4), toute entrée incontrôlée d'air étant interdite par l'isolation des caissons de la première chambre ouverte de chaque foyer à l'aide de châssis d'obturation, la dépression nécessaire au fonctionnement du four, créée dans les canalisations de gaz (2, 2') par le ventilateur (Vk) de la cheminée, étant régulée par les clapets réglables (7) montés dans ces canalisations (2, 2').

2. Procédé selon la revendication 1, caractérisé en ce que l'on injecte de l'air frais dans la zone des carneaux (3), à travers des ouvertures réglables (5) pour garantir une concentration d'oxygène suffisante dans le gaz porteur parvenant aux différents foyers.

Fig.1

Fig.2